# NEW EUROPEAN PATENT SPECIFICATION

(11) **EP 0 870 964 B2**
(45) Date of publication and mention of the opposition decision: **28.04.2004**
(45) Mention of the grant of the patent: 02.11.2000
(21) Application number: 97830393.1
(22) Date of filing: 25.07.1997
(51) Int. Cl.: F16L 13/14, F16L 13/16

(54) **Pressfitting**
Rohrpressverbindung
Raccord à compression

(30) Priority: 07.04.1997 IT MI970793
(43) Date of publication of application: 14.10.1998
(73) Proprietor: Raccorderie Metalliche S.p.A., 46010 Campitello di Marcaria, Mantova (IT)
(72) Inventor: Miozzo, Luigi, 46030 Cappeltta Di Virgilio (Mantova) (IT)
(74) Representative: Pizzoli, Pasquale Vincenzo

(56) References cited:
- EP-A- 0 361 630
- DE-A- 2 725 280
- US-A- 3 149 861
- US-A- 5 025 546
- US-A- 5 168 618

## Description

The present invention relates to a pressfitting and in particular to a pressfitting wherein an end thereof is provided with a bulge having a hook-shaped longitudinal section. Such a pressfitting according to the preamble of claim 1 is known from DE 2 725 280 A1.

It is known that pressfittings are used in practice for permanently connecting tubes to each other. For this purpose it is not only necessary that the tubes to be connected to each other are firmly joined together through the pressfitting, but also that the tightness is assured, so that any fluid conveyed through the tubes connected by the pressfitting cannot come out from the latter. Therefore, in practice it is known to provide the ends of the pressfitting, if these are used as openings for fitting the tubes to be connected, with a watertight element, for instance a gasket (O-ring). The pressfittings known in practice have a hook-shaped longitudinal section at their front end for arranging said gasket inside the pressfitting without reducing the inner diameter, and for holding the gasket during the fitting of a tube into the pressfitting. The gasket is thus housed in the hook-shaped space.

EP-0 361 630 discloses a pressfitting of the above-mentioned type, wherein a front end is provided with a bulge having a hook-shaped longitudinal section. This bulged end has, at its front end, that is at the side of the free end of the pressfitting, a straight portion, which continues almost vertically towards the longitudinal axis of the pressfitting. Said straight front end continues through a very convex curvature, joining to a portion which is inclined toward the longitudinal axis of the pressfitting and joined to a cylindrical portion of the pressfitting. Further, a gasket is used wherein the inner diameter must be at least equal to or greater than the inner diameter of the cylindrical portion of the pressfitting. Because of the inclined portion, a proportionally greater space must thus be used for the pressing. If a gasket having an inner diameter shorter than the inner diameter of the cylindrical portion of the pressfitting would be used, there might be the danger of "pinching" the gasket, as the latter would move at least partially toward the free space left by the inclined portion and here would be pinched during the pressing. A complicated arrangement is needed to avoid this danger and allow a long pressing space.

It is therefore an object of the present invention to provide a pressfitting of the type described at the beginning, wherein the space provided at the front end intended to house the gasket is obtained in a simple way and allows the use of a simple pressing device.

Such an object is obtained by means of a pressfitting, the features of which are disclosed in the main claim. By providing a bulge having a longitudinal section with the shape of a substantially isosceles triangle, the pressing space can be reduced with respect to EP-0 361 630. A gasket allowing a further reduction of the pressing space and therefore allowing the use of a pressing device built in a simpler way, can be furthermore used. Besides this, thanks to the isosceles and thus symmetric longitudinal section of the end, both sides of the pressfitting can be symmetrically charged during the pressing. On the contrary, with the pressfitting according to EP-0 361 630 an irregular pressure must be provided on both sides of the bulge at the pressing stage, because of the asymmetric shape of the bulge. At last, the outer diameter can be reduced with respect to the known pressfitting of EP-0 361 630 of the firm Mannesmann.

According to the present invention it is particularly advantageous that the angle at the vertex is comprised between 55° and 65° approximately, preferably equal to about 60°. Thanks to this arrangement the gasket can also be surrounded by the bulged portion, before the pressing, with an angle having a size of 120°, so that the gasket is firmly held in the pressfitting during the tube assembling.

In order to provide a sufficient pressing space for the bulge side facing toward the free end of the pressfitting during the pressing, the size defined by the pressfitting bulge is further intended to be 0,7-0,8 mm greater than the inner diameter of the cylindrical portion of the pressfitting.

In use, it is sufficient to fit deeply enough in the pressfitting the end of one of the tubes to be connected for subsequently carrying out a watertight connection. However, it has been proved to be advantageous to provide inside the cylindrical portion at least a stop against which one of the tubes to be connected leans during the fitting. A defined seat for the tube to be connected is thus obtained. A sinking in the cylindrical portion, in the form of a rib, is here particularly advantageous as stopping device.

The pressfitting according to the present invention can be carried out with every shape suitable for the different kinds of use. For instance, in the simplest embodiment thereof, the pressfitting according to the present invention can be provided for connecting the ends of two aligned tubes. Besides this, the pressfitting can be also provided for connecting three tubes forming a T- junction so that, in this case, the pressfitting is T-shaped, with three openings for the tubes. The pressfitting can be further used for connecting two tubes, for instance, in a 90° junction. In this case the pressfitting is L-shaped. Likewise, the pressfitting may be used as a sleeve, a reducer or a bend and similar forms. Finally the pressfitting may have a threaded end, irrespective of the number of tubes to be connected, in order to provide a screw-joint. According to the known pressfitting, as disclosed in the above-mentioned EP-0 361 630, a ring gasket is arranged in the bulged portion. Such a ring gasket has an inner diameter which is at least equal to or greater than the inner diameter of the cylinder-shaped portion of the tubular body. With this arrangement the gasket cannot be moved from its position at the tube end during the fitting of the end itself. Because of the relatively flat angle between the longitudinal axis of the tubular body and the inclined portion joining the bulge to the cylindrical portion of the known pressfitting, there is a space to which a gasket portion might move during the fitting of the tube end, owing to the elastic yieldingness of the gasket, as the tube section might drag the gasket itself. As in this known pressfitting the obliquely extending portion is thus deformed more than the opposite part of the bulge during the pressing, the gasket portion squashed into the free space might be locked, and therefore the gasket tightness would be considerably reduced.

On the contrary, the solution adopted in the present invention provides that the inner diameter of the gasket is at least equal to or shorter than the inner diameter of the cylindrical portion of the tubular body. Thanks to the isosceles development, and in particular thanks to the angulation comprised between 55° and 65°, preferably 60°, of the vertex angle of the isosceles triangle, the gasket is so housed in the bulge that it cannot be pressed into a free space during its deformation when the tube end is fitted, whereby a good tightness is obtained, but also the gasket is not squashed during the pressing. For this reason, the gasket, although it protrudes into the fitting path of the tube section, cannot be moved by the tube itself during the fitting, but is only deformed in a direction approximately perpendicular with respect to the longitudinal axis of the tubular body. The gasket deformed by the fitting of the tube thus leans onto the surface thereof and leans also onto the inner sides of the bulge. A relatively smaller pressing space is therefore needed for obtaining a sufficient tightness. The inner diameter of the gasket should advantegeously be at least 1,5%, preferably from 1,5% to 2,5%, shorter than the inner diameter of the cylindrical portion of the tubular body.

Furthermore, thanks to the arrangement proposed in the present invention, the inner diameter of the gasket is shorter than the inner diameter of the pressfitting, while in EP-0 361 630 the inner diameter of the gasket must be at least equal to or greater than the inner diameter of the tubular end of the pressfitting, so that the total outer diameter of the pressfitting is shorter with respect to the known pressfitting.

Further advantages and features of the pressfitting according to the present invention will become evident to those skilled in the art from the following detailed description of an embodiment thereof with reference to the attached drawings, wherein:
- figure 1 shows a partial longitudinal section through an end of a pressfitting according to the present invention, before the pressing; and
- figure 2 shows a partial longitudinal section, reduced with respect to figure 1, through an entire pressfitting, whereby an end is shown in a non-pressed state and the other end is shown in a pressed state.

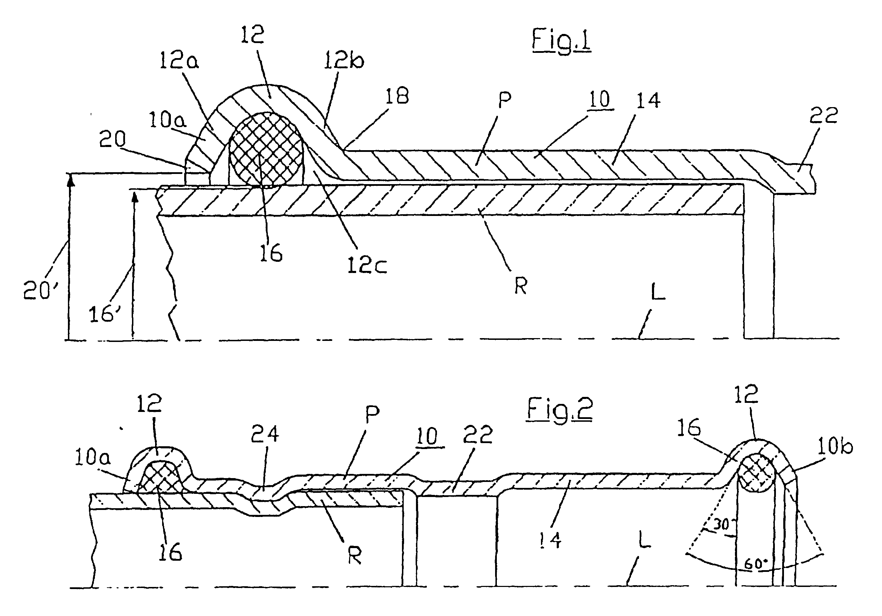

Referring to figures 1 and 2, a pressfitting P according to the present invention has a tubular body 10, preferably made of stainless steel, which has at least at a front end 10a a hook-shaped bulge, as seen in the longitudinal section of tubular body 10, protruding from the outer perimeter of the latter. On the side of the other end 10b of of tubular body 10, not shown in figure 1, bulge 12 is joined to a cylindrical portion 14 which substantially continues coaxial to longitudinal axis L of tubular body 10 and has an outer diameter shorter than the outer diameter of bulge 12.

Bulge 12 has, in the non-pressed state of pressfitting P, the shape of an isosceles triangle, always seen in the longitudinal section of tubular body 10. In the present embodiment, the vertex angle, that is the angle at the top of the isosceles triangle, has a size of about 60°, and the base angles, comprised between both sides 12a, 12b of the bulge, have also a size of about 60° with respect to the longitudinal axis L of tubular body 10, so that in this embodiment of the pressfitting according to the present invention the section of bulge 12 has the shape of an equilateral triangle, as a special form of isosceles triangle. The linkage from the bulge side 12a facing toward the free end of tubular body 10 to the other bulge side 12b facing toward cylindrical portion 14, is therefore coaxially bent outwards, that is parabola-shaped. A gasket 16, preferably elastic or deformable, preferably an O-ring with a preferably round cross-section having an inner diameter shown with reference number 16', is housed in the inner space 12c formed by bulge 12 inside tubular body 10. In the non-pressed state of bulge 12 gasket 16 is enclosed, that is contained with an angle of about 120°, thanks to bulge 12 having the shape of an isosceles triangle with a vertex angle of about 60°. As further comes out from figure 1, side 12b of bulge 12 facing toward cylindrical portion 14 continues in the cylindrical portion 14 with a relatively marked bend 18.

Side 12a of bulge 12 facing toward the free end of tubular body 10 forms an opening 20 for a tube R to be connected to this end of pressfitting P. The diameter 20' of this opening 20 is about 0,7 to 0,8 mm greater than the inner diameter of cylindrical portion 14 of pressfitting P. A sufficient space for pressfitting side 12a. which defines opening 20, is thus obtained during the pressing.

As further comes out from figure 1, cylindrical portion 14 has at some distance from the bulged end 10a of pressfitting P a rib 22 serving as stop for the tube R fitted in the pressfitting itself.

It should be noted that the ratio between the outer diameter of gasket 16 and the inner diameter of pressfitting P, in the area of cylindrical portion 14, changes according to the gasket on the market and is adapted to the corresponding size of pressfitting P.

Furthermore, it should be noted the inner diameter 16' of gasket 16, before tube R is fitted in tubular body 10, must be at least about 1,5%, preferably about 1,5% to 2,5%, shorter than the inner diameter of cylindrical portion 14 of pressfitting P. Gasket 16 is thus arranged between the two portions defining an angle of 60° so that the gasket itself cannot move during the insertion of tube R. This reduction of the inner diameter of gasket 16 further makes the following advantages possible.

First, the reduction of the inner diameter of gasket 16 allows a corresponding reduction of the outer diameter of the bulge-shaped end 10a. Second, an outer profile very close to an ideal round shape is obtained, after the pressing stage, by reducing the outer diameter of the bulge-shaped end 10a of pressfitting P. Thus, it is possible to considerably reduce the plastic ovalization caused by the two jaws. driven against each other, of the pressing apparatus of the pressfitting. As a result. the risk that pressfitting P is "pinched" where the jaws of the pressing apparatus press against each other is reduced. At last, the pressing process consequently reproduces at most the shape of gasket 16 so as to avoid a dangerous undulation development where the jaws press against each other.

In figure 2 pressed portion 10a is compared with non-pressed portion 10b of an end of pressfitting P. As may be seen, bulge 12, after the pressing stage, has a trapezoidal longitudinal section. Also gasket 16 is correspondingly deformed and its outer side, as seen in section, leans onto the walls of inner space 12c and onto the outer circumference of tube R so that space 12c is almost totally occupied by the deformed gasket 16.

As comes out from figure 2, pressfitting P and tube R after the pressing stage have an annular groove, that is a pressed section 24, where pressfitting P and tube R are pressed together.

It should be finally noted that tubular body 10 can be produced with a material containing carbon or with copper.

## Claims

1. Pressfitting for connecting tubes in a permanent and tight manner, comprising a tubular body (10) having at least at one (10a) of its front ends (10a, 10b) a bulge (12) which is joined to a cylindrical portion (14) at the side of the other end (10b) of the tubular body (10) and has a hook-shaped longitudinal section with respect to the tubular body (10), wherein a straight portion (12b) is obliquely arranged with respect to the longitudinal axis (L) of the tubular body (10) between the bulge (12) and the cylindrical portion (14) whereby the longitudinal section of the bulge (12) has the shape of a substantially isosceles triangle, preferably equal to about 60°.

2. Pressfitting according to claim 1, **characterized in that** the opening (20) of the tubular body (10) defined by the bulge (12) is from 0,7 mm to 0,8 mm greater than the inner diameter of the cylindrical portion (14).

3. Pressfitting according to one of claims 1 to 2, **characterized in that** the inner side of the cylindrical portion (14) is provided with at least a stop (22) against which a tube (R) to be connected leans during its fitting in the tubular body (10).

4. Pressfitting according to claim 3, **characterized in that** the stop (22) is formed by a rib in the cylindrical portion (14).

5. Pressfitting according to one of claims 1 to 4, **characterized in that** a side (12a) which forms the free end of the tubular body (10) and is preferably a side of the substantially isosceles triangle, is obliquely arranged with respect to the longitudinal axis (L) of the tubular body (10).

6. Pressfitting according to one of claims 1 to 5, wherein a gasket (16) is arranged in the hook-shaped bulge (12), **characterized in that** the inner diameter of the gasket (16) is at least equal to or less than the inner diameter of the cylindrical portion (14) of . the tubular body (10).

7. Pressfitting according to claim 6, **characterized in that** the inner diameter of the gasket (16) is at least 1,5%, preferably from about 1,5% to about 2,5%, shorter than the inner diameter of the cylindrical portion (14) of the tubular body (10).

## Patentansprüche

1. Preßverbindung zum Verbinden von Rohren in einer dauerhaften und dichten Weise, mit einem rohrförmigen Körper (10), bei dem wenigstens an einem (10a) seiner Frontenden (10a, 10b) eine Ausbauchung (12) vorhanden ist, die sich an einen zylinderförmigen Abschnitt (14) auf der Seite des anderen Endes (10b) des rohrförmigen Körpers (10) anschließt und einen hakenförmig gestalteten longitudinalen Querschnitt in bezug auf den Rohrkörper (10) besitzt, wobei ein gerader Abschnitt (12b) in bezug auf die Längsachse (L) des rohrförmigen Körpers (10) zwischen der Ausbauchung (12) und dem zylinderförmigen Abschnitt (14) schräg angeordnet ist, und wobei der longitudinale Querschnitt der Ausbauchung (12) dies Gestalt eines im wesentlichen gleichschenkligen Dreiecks besitzt, **dadurch gekennzeichnet, daß** der Scheitelpunktwinkel des gleichschenkligen Dreiecks angenähert bei 55° und 65° liegt, bevorzugt gleich ist etwa 60°.

2. Preßverbindung nach Anspruch 1, **dadurch gekennzeichnet, daß** die Öffnung (20) des rohrförmigen Körpers (10), die durch die Ausbauchung (12) definiert ist, um 0,7 mm bis 0,8 mm größer ist als der Innendurchmesser des zylinderförmigen Abschnitts (14).

3. Preßverbindung nach Anspruch 1 oder bis 2, **dadurch gekennzeichnet, daß** die Innenseite des zylinderförmigen Abschnitts (14) mit wenigstens einem Anschlag (22) ausgestattet ist, gegen den ein Rohr (13), welches angeschlossen werden soll, während dessen Einpassung in den rohrförmigen Körper (10) ansteht.

4. Preßverbindung nach Anspruch 3, **dadurch gekennzeichnet, daß** der Anschlag (22) durch eine Rippe in dem zylinderförmigen Abschnitt (14) gebildet ist.

5. Preßverbindung nach einem der Ansprüche 1 bis 4, **dadurch gekennzeichnet, daß** eine Seite (12a) die das freie Ende des rohrförmigen Körpers (10) bildet und die bevorzugt eine Seite des im wesentlichen gleichschenkligen Dreiecks ist, schräg in bezug auf die Längsachse (L) des rohrförmigen Körpers (10) angeordnet ist.

6. Preßverbindung nach einem der Ansprüche 1 bis 5, bei der eine Dichtung (16) in der hakenförmig gestalteten Ausbauchung (12) angeordnet ist, **dadurch gekennzeichnet, daß** der Innendurchmesser der Dichtung (16) wenigstens gleich ist oder kleiner ist als der Innendurchmesser des zylinderförmigen Abschnitts (14) des rohrförmigen Körpers (10).

7. Preßverbindung nach Anspruch 6, **dadurch gekennzeichnet, daß** der Innendurchmesser der Dichtung (16) um wenigstens 1,5%, bevorzugt von etwa 1,5% bis etwa 2,5% kleiner oder kürzer ist als der Innendurchmesser des zylinderförmigen Abschnitts (14) des rohrförmigen Körpers (10).

## Revendications

1. Raccord à compression pour la liaison de tubes d'une manière permanente et étanche, comprenant un corps tubulaire (10) présentant au moins, à une (10a) de ses extrémités avant (10a, 10b), un renflement (12) qui est réuni à une partie cylindrique (14) au niveau du côté de l'autre extrémité (10b) du corps tubulaire (10) et présente une section longitudinale en forme de crochet par rapport au corps tubulaire (10), dans lequel une partie droite (12b) est disposée obliquement par rapport à l'axe longitudinal (L) du corps tubulaire (10) entre le renflement (12) et la partie cylindrique (14), et dans lequel la section longitudinale du renflement (12) présente la forme d'un triangle sensiblement isocèle, **caractérisé en ce que** l'angle au sommet du triangle isocèle est approximativement compris entre 55° et 65°, de préférence égal à environ 60°.

2. Raccord à compression selon la revendication 1, **caractérisé en ce que** l'embouchure (20) du corps tubulaire (10) définie par le renflement (12) est de 0,7 mm à 0,8 mm plus grand que le diamètre interne de la partie cylindrique (14).

3. Raccord à compression selon la revendication 2, **caractérisé en ce que** le côté interne de la partie cylindrique (14) est muni d'au moins une butée (22) contre laquelle un tube (R) devant être relié repose au cours de son montage dans le corps tubulaire (10).

4. Raccord à compression selon la revendication 3, **caractérisé en ce que** la butée (22) est formée par une nervure prévue dans la partie cylindrique (14).

5. Raccord à compression selon une des revendications 1 à 4, **caractérisé en ce qu'**un côté (12a) qui forme l'extrémité libre du corps tubulaire (10) et est de préférence un côté du triangle sensiblement isocèle, est disposé obliquement par rapport à l'axe longitudinal (L) du corps tubulaire (10).

6. Raccord à compression selon une des revendications 1 à 5, dans lequel un joint d'étanchéité (16) est disposé dans le renflement en forme de crochet (12), **caractérisé en ce que** le diamètre interne du joint d'étanchéité (16) est au moins égal ou est inférieur au diamètre interne de la partie cylindrique (14) du corps tubulaire (10).

7. Raccord à compression selon la revendication 6, **caractérisé en ce que** le diamètre interne du joint d'étanchéité (16) est au moins 1,5%, de préférence d'environ 1,5% à environ 2,5%, plus court que le diamètre interne de la partie cylindrique (14) du corps tubulaire (10).
